# EUROPEAN PATENT SPECIFICATION

(11) **EP 3 879 678 B1**
(45) Date of publication and mention of the grant of the patent: **13.03.2024**
(21) Application number: 21159128.4
(22) Date of filing: 25.02.2021
(51) Int. Cl.: H02K 7/116, H02K 7/102, H02K 11/33, H02K 11/215, H02K 9/22

(54) **GEAR MOTOR**
GETRIEBEMOTOR
MOTEUR À ENGRENAGES

(30) Priority: 12.03.2020 JP 2020042512
(43) Date of publication of application: 15.09.2021
(73) Proprietor: Sumitomo Heavy Industries, Ltd., Tokyo 141-6025 (JP)
(72) Inventor: MORITANI, Koji, Kanagawa, 237-8555 (JP); YAMAMOTO, Taizo, Kanagawa, 237-8555 (JP)
(74) Representative: Louis Pöhlau Lohrentz

(56) References cited:
- DE-A1-102012 024 227
- DE-A1-102018 108 056
- US-A1- 2013 049 497
- US-A1- 2015 162 798
- US-A1- 2016 254 719

## Description

### BACKGROUND OF THE INVENTION

### Field of the Invention

The present invention relates to a gear motor in which a speed reducer and a motor are connected.

### Description of Related Art

In a gear motor of the related art in which a motor and a speed reducer are connected side by side in an axial direction of a motor shaft, a heat transfer pin is provided to pass through a connection surface of a casing including a plurality of members, and heat of the speed reducer is efficiently transmitted by the heat transfer pin (for example, refer to Japanese Patent No. 5844629 or German Patent Publication No. 10-2012-024227). United States Patent Publication No. 2015-162798 discloses a brushless motor that can reduce the moment generated when a rotor is vibrated. German Patent Publication No. 10-2018-108056 discloses an actuator for a drive train of a motor vehicle, comprising a drive unit with an electronic module and an electric motor accommodated in a motor pot, a gearbox rotationally driven by the electric motor, and a screw connection which connects a housing of the drive unit and a gear housing of the gearbox. United States Patent Publication No. 2016-254719 discloses a motor assembly having an electric motor comprising a motor housing, and an electronics unit.

### SUMMARY OF THE INVENTION

However, in the gear motor of the related art, in a member such as a stator core which is a heat source of the motor, another member such as a casing is interposed therebetween until the member reaches the heat transfer pin. Accordingly, a heat transfer loss is greatly affected at another member or a boundary thereof, and there is a problem that sufficient heat dissipation cannot be performed.

An object of the present invention is to provide a gear motor that efficiently exhausts heat.

According to the present invention, there is provided a gear motor as defined in claim 1.

According to the present invention, it is possible to provide a gear motor that efficiently exhausts heat.

### BRIEF DESCRIPTION OF THE DRAWINGS

Fig. 1 is a cross-sectional view illustrating a gear motor according to a first embodiment of the present invention.
Fig. 2 is an enlarged cross-sectional view of an outer peripheral portion of a long bolt inserted into a bolt insertion hole.
Fig. 3 is a cross-sectional view illustrating a gear motor according to a second embodiment of the present invention.

### DETAILED DESCRIPTION OF THE INVENTION

### [First Embodiment]

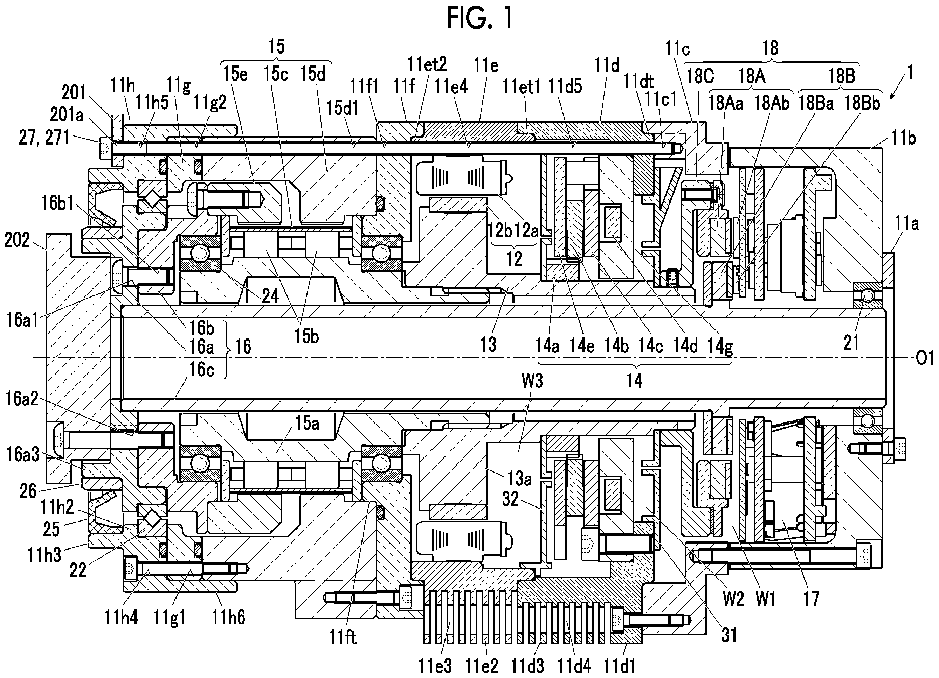

Hereinafter, a first embodiment of the present invention will be described in detail with reference to the drawings. Fig. 1 is a cross-sectional view illustrating a gear motor 1 according to the first embodiment of the present invention.

### [Outline Configuration of Gear Motor]

The gear motor 1 of the present embodiment is a device that outputs rotational power, and a use of the gear motor 1 is not particularly limited, but the gear motor 1 can be used, for example, as a joint gear motor of a cooperative robot that works in collaboration with a person. Hereinafter, a direction along the center axis O1 is referred to as an axial direction, a radial direction of the center axis O1 is referred to a radial direction, and a rotational direction about the center axis O1 is referred to as a circumferential direction. The center axis O1 is a center axis of each of a shaft portion 16c of an output member 16 and a rotor shaft 13. Further, in the axial direction of the center axis O1, a side (left side in Fig. 1) on which the output member 16 is located is referred to as an output side, and the opposite side (right side in Fig. 1) is referred to a counter-output side or an input side.

The gear motor 1 includes a casing 11 that is connected to a device-outside-mating member (fixing member) 201 serving as a mating member, a motor (electric motor) 12 that generates rotational power, a rotor shaft 13 to which torque is input by the motor 12, a brake 14 which can apply a braking force to the rotor shaft 13, a reduction mechanism 15 serving as a speed reducer for decelerating a rotating motion of the rotor shaft 13, an output member 16 that outputs the rotating motion decelerated by the reduction mechanism 15 to the outside (another mating member (driven member) 202) of the device, a circuit unit 17 on which an electric circuit is mounted, and a detection unit 18 that detects rotations of the rotor shaft 13 and the output member 16.

The circuit unit 17 includes a motor driver board on which a drive circuit of the motor 12 is mounted, and an encoder board on which a detection circuit of the detection unit 18 is mounted.

The detection unit 18 includes an input-side rotation detector 18A that detects a rotation of the rotor shaft 13 and an output-side rotation detector 18B that detects a rotation of the output member 16.

The reduction mechanism 15, the motor 12, the brake 14, the detection unit 18, and the circuit unit 17 are disposed side by side from the output side to the counter-output side in this order.

A detection unit accommodating space W1 that accommodates a constituent member of the detection unit 18, a brake accommodating space W2 that accommodates a constituent member of the brake 14, and a motor accommodating space W3 that accommodates a constituent member of the motor 12 are provided between the casing 11 and a rotary shaft portion (rotor shaft 13, wave generator 15a, or shaft portion 16c).

The gear motor 1 further includes a first blocking wall 31 to block flows of foreign matters between the detection unit accommodating space W1 and the brake accommodating space W2, and a second blocking wall 32 to block flows of foreign matters between the brake accommodating space W2 and the motor accommodating space W3.

Each of the first blocking wall 31 and the second blocking wall 32 includes two members, that is, a member on a fixed side of the casing 11 and a member a fixed side of the rotor shaft 13, and a clearance is formed between the two members to an extent that free entry of foreign matters is hindered. Each of the first and second blocking walls 31 and 32 is formed of various resin materials such as a synthetic resin, a fiber reinforced resin, a paper bake material, or a cloth bake material, or metal such as aluminum.

### [Casing]

The casing 11 includes hollow tubular or annular members 11a to 11h connected to each other, and is connected to and supported by the device-outside-mating member 201. Moreover, each of the members 11a to 11h or a first internal gear 15d described later can also be referred to as individual casings.

Hereinafter, specific structural examples of the members 11a to 11h will be described, but the casing 11 is not limited to the specific examples.

The member 11a covers a periphery of one end portion of the shaft portion 16c on the counter-output side. The member 11a has a through-hole passing through the member 11a in the axial direction, and the through-hole of the member 11a communicates with a through-hole of the shaft portion 16c. The member 11a contacts an outer ring of a bearing 21 in the axial direction. The member 11a is connected to the member 11b via a bolt (connection member).

The member 11b covers the circuit unit 17 in the radial direction and from the counter-output side in the axial direction, internally fits the outer ring of the bearing 21, and is connected to the member 11c via a bolt.

The member 11c is located radially outside the detection unit 18 and covers the detection unit 18 in the radial direction. The member 11c is connected to the member 11b and the member 11d via a bolt.

The member 11d is located radially outside the brake 14, covers the brake 14 in the radial direction, and supports a fixed-side member of the brake 14.

The member 11d has an annular protrusion portion 11dt that protrudes to the counter-output side. The annular protrusion portion 11dt has a diameter smaller than a maximum outer diameter of the member 11d, and is fitted (spigot-fitted) into the member 11c.

The member 11d has flange portions 11d1 at a plurality of locations in the circumferential direction on the counter-output side, and each of the flange portions 11d1 is connected to the member 11c via a bolt. The member 11d includes a fin portion 11d3 disposed on an outer peripheral portion other than the flange portions 11d1.

The fin portion 11d3 includes a plurality of heat radiating fins extending in the radial direction and spreading in the circumferential direction. A through-hole 11d4 through which tips of a bolt and a tool pass is provided at a location (location overlapping the bolt hole when extending the bolt hole in the axial direction) of the fin portion 11d3 corresponding to a bolt hole of the flange portion 11d1.

The member 11e is located radially outside the motor 12, covers the motor 12 in the radial direction, and fixedly supports a stator core 12a of the motor 12 at an inner peripheral portion thereof.

The member 11e includes an annular protrusion portion 11et1 protruding to counter-output side, and an annular protrusion portion 11et2 protruding to the output side. The annular protrusion portion 11et1 on the counter-output side has a diameter smaller than a maximum outer diameter of the member 11e, and is fitted (spigot-fitted) into the member 11d. The annular protrusion portion 11et2 on the output side has a diameter smaller than a maximum outer diameter of the member 11e, and is fitted (spigot-fitted) into the member 11f.

The member 11e includes a fin portion 11e2 disposed in a portion of an outer peripheral portion thereof. The fin portion 11e2 includes a plurality of heat radiating fins extending in the radial direction and spreading in the circumferential direction. The fin portion 11e2 and the fin portion 11d3 of the above-mentioned member 11d are adjacent to each other, and in the fin portion 11e2, a through-hole 11e3 through which a bolt and a tool pass are provided at a position (an overlapping position when the through-hole 11d4 extends) continuous with the through-hole 11d4 of the fin portion 11d3.

The member 11f covers an output side of the motor 12, and an outer ring of a bearing 23 disposed on a counter-output side of the reduction mechanism 15 is internally fitted into the member 11f. The member 11f rotatably supports the wave generator 15a via the bearing 23.

The member 11f is connected to a constituent member (first internal gear 15d) of the reduction mechanism 15 via a bolt in the vicinity of an outer peripheral portion thereof.

The member 11f has an annular protrusion portion lift that protrudes to the output side. The annular protrusion portion lift has a diameter smaller than a maximum outer diameter of the member 11f, and is fitted (spigot-fitted) into the first internal gear 15d.

The member 11g is an annular body having an outer diameter equal to that of an output-side end portion of the first internal gear 15d, and a counter-output side of the member 11g contacts an output-side end portion of the first internal gear 15d. Further, the output-side end portion of the member 11g contacts an outer ring of a bearing 22 internally fitted into the member 11h, and thus the bearing 22 is fixed in the axial direction.

The member 11h covers the output member 16 in the radial direction at an output-side end portion thereof, and internally fits the outer ring of the bearing 22 and a seal 25. The member 11h rotatably supports the output member 16 via the bearing 22. The member 11h is connected to the member 11g and a constituent member (first internal gear 15d) of the reduction mechanism 15 in the vicinity of an outer peripheral portion thereof in a state of being fastened together via a bolt.

In the reduction mechanism 15, the first internal gear 15d has a portion that projects to the output side from a second internal gear 15e to cover a radial outer side of the second internal gear 15e, and the portion is connected to the member 11g and the member 11h. In an outer peripheral portion of the member 11h, bolt insertion holes 11h4 communicating with screw holes provided in the first internal gear 15d are provided at a plurality of positions different in the circumferential direction. Further, the above-mentioned member 11g has a bolt insertion hole 11g1 that communicates with the screw hole provided in the first internal gear 15d to be disposed to coincide with the bolt insertion hole 11h4 of the member 11h in the circumferential direction.

Further, the member 11h has a positioning protrusion (ring portion) 11h2 that protrudes inward in the radial direction and determines an axial position of the bearing 22 and an axial position of the seal 25. Further, the member 11h has tubular extension portions 11h3 and 11h6 that extend to the output side and the counter-output side in the axial direction, respectively. The tubular extension portion 11h3 accommodates the seal 25 therein. The tubular extension portion 11h6 accommodates the member 11g and the output-side end portion of the first internal gear 15d inside the tubular extension portion 11h6.

### [Output Member]

The output member 16 includes members 16a and 16b connected to each other and a shaft portion 16c, and is rotatably supported by the casing 11 via the bearings 21 and 22. The output member 16 has a hollow structure (hollow tubular shape). A portion of the output member 16 is exposed on the output side, and the exposed portion is connected to the mating member 202.

More specifically, the shaft portion 16c passes through the reduction mechanism 15 and extend to the counter-output side where the detection unit 18 and the circuit unit 17 are disposed. A rotating portion 18Ba of the output-side rotation detector 18B is fixed to the shaft portion 16c. The shaft portion 16c is tightly fitted to the member 16a on the output side.

The member 16b is connected to the second internal gear 15e of the reduction mechanism 15 by a bolt and internally fits an outer ring of an output-side bearing 24 of the reduction mechanism 15. The member 16b introduces a rotating motion decelerated from the reduction mechanism 15 and rotatably supports the wave generator 15a via the bearing 24.

The member 16a is disposed on an output side of the member 16b, internally fits the shaft portion 16c, and externally fits an inner ring of the bearing 22. The member 16a has a bolt insertion hole 16a1 that passes through a shaft portion of a bolt and accommodates a head portion of the bolt, and a bolt insertion hole 16a2 through which a shaft portion of a bolt passes . The bolt insertion holes 16a1 and 16a2 communicate with any of a plurality of screw holes 16b1 of the adjacent member 16b.

The member 16a is directly connected (temporarily fixed) to the member 16b via a bolt inserted into the bolt insertion hole 16a1. Further, the member 16a is co-tightened between the mating member 202 and the member 16b via a bolt inserted into the bolt insertion hole 16a2. That is, the mating member 202 is connected to the output member 16 via a bolt screwed into the screw hole of the member 16b via the bolt insertion hole 16a2. The member 16a is directly connected to the member 16b (connection by four bolts having different positions in the circumferential direction) and co-tightened between the member 16b and the mating member 202 (connection by eight bolts having different positions in the circumferential direction), and thus, a specified connection intensity of the member 16a with respect to the member 16b is achieved.

The member 16a has a tubular portion 16a3 that radially faces the tubular extension portion 11h3 of the casing 11. The tubular portion 16a3 is disposed on an output side of the bolt insertion hole 16a1. A sleeve 26 with which a lip portion of the seal 25 is in contact is externally fitted to the tubular portion 16a3, and the seal 25 is disposed between the sleeve 26 and the tubular extension portion 11h3 of the casing 11. Moreover, a structure of the output member 16 is not limited to the above-mentioned specific example.

### [Motor]

The motor 12 has the stator core 12a and a hollow tubular rotor core 12b. The rotor core 12b is constituted by a permanent magnet, and the stator core 12a is constituted by an electromagnet. The stator core 12a is press-fitted and fixed to an inner periphery of the member 11e of the casing 11. The rotor core 12b internally fits an enlarged diameter portion 13a of the rotor shaft 13 by the press fitting and is fixedly

### connected.

The rotor shaft 13 has a hollow structure and is concentrically disposed around the shaft portion 16c of the output member 16 with a clearance therebetween. The rotor shaft 13 is connected to the rotor core 12b of the motor 12. The motor 12 and the rotor shaft 13 are disposed on the counter-output side of the reduction mechanism 15. A rotating portion 18Aa of the input-side rotation detector 18A is fixed to a counter-output side of the rotor shaft 13 via a hub member 18C.

### [Reduction Mechanism]

The reduction mechanism 15 is a tubular type flexible meshing gear mechanism, and includes the wave generator 15a, a wave generator bearing 15b, an external gear 15c that is flexibly deformed by a rotation of the wave generator 15a, and an external gear 15c, and a first internal gear 15d and a second internal gear 15e that mesh with the external gear 15c. Moreover, the reduction mechanism 15 is not limited to the tubular type flexible meshing gear mechanism, and various reduction mechanisms can be adopted. For example, the reduction mechanism 15 may be a cup type or top hat type flexible meshing gear mechanism, an eccentric oscillating type reduction mechanism, a simple planetary reduction mechanism, or a traction drive type reduction mechanism having no gear. Further, the reduction mechanism may not be provided.

The wave generator 15a has a hollow structure and is concentrically disposition around the shaft portion 16c of the output member 16 with a clearance in between. The wave generator 15a is connected (for example, spline connected) to the rotor shaft 13 and rotates integrally with the rotor shaft 13. A shaft portion of the wave generator 15a is rotatably supported by the casing 11 and the output member 16 via the bearing 23 and 24. The wave generator 15a has a circular shape of which a cross-sectional outer shape of a shaft portion perpendicular to the axial direction is centered on the center axis O1, and for example, a cross-sectional outer shape of the wave generator 15a perpendicular to the axial direction at a portion where the wave generator bearing 15b contacts is an elliptical shape.

The external gear 15c has flexibility. Therefore, the external gear 15c has an elliptical shape following the wave generator 15a disposed inside the external gear 15c, and when the wave generator 15a rotates, elliptical long shaft portion and short shaft portion are deformed so as to orbit in accordance with the rotation.

The first internal gear 15d is connected to the casing 11 and meshes with a range on a counter-output side of the external gear 15c in the axial direction.

The second internal gear 15e is connected to the output member 16 and meshes with the range on an output side of the external gear 15c in the axial direction.

In the reduction mechanism 15, a rotating motion is input to the wave generator 15a, and a reduced rotating motion is output to the second internal gear 15e. In the reduction mechanism 15, a torque input to the wave generator 15a is amplified, the amplified torque is transmitted to the second internal gear 15e, and a reaction force of the amplified torque is transmitted to the first internal gear 15d. That is, the amplified torque is transmitted to the first internal gear 15d and the second internal gear 15e.

Respective members of the gear motor 1 are made of a plurality of different materials. The members 11c, 11d, 11e, and 11h in the casing 11 and the members 16a and 16b of the output member 16 are made of a light metal such as aluminum. The member 11f in the casing 11, the first internal gear 15d, and the second internal gear 15e are made of a resin material such as carbon fiber reinforced plastic (CFRP). As the resin material, other fiber-reinforced resins such as fiber-reinforced plastic (FRP), natural resins, bake materials, or the like can be applied. The sleeve 26 on which the seal 25 slides is made of an iron-based metal such as steel.

The material of each member of the gear motor 1 is not limited to the example of the present embodiment, and may be appropriately selected. For example, in order to reduce weight of the gear motor 1, the member 11a to 11e of the casing 11 may be made of the same resin material as that of the member 11f.

### [Detection Unit]

The detection unit 18 includes the input-side rotation detector 18A that detects the rotation of the rotor shaft 13 and the output-side rotation detector 18B that detects the rotation of the output member 16.

The input-side rotation detector 18A has the rotating portion 18Aa that rotates integrally with the rotor shaft 13 and a sensor 18Ab that is disposed in the vicinity of the rotating portion 18Aa and detects an amount of rotation of the rotating portion 18Aa.

The output-side rotation detector 18B has the rotating portion 18Ba that rotates integrally with the output member 16 and a sensor 18Bb that is disposed in the vicinity of the rotating portion 18Ba and detects an amount of rotation of the rotating portion 18Ba.

For example, each of the input-side rotation detector 18A and the output-side rotation detector 18B is a rotary encoder that output a displacement of the rotation of the rotating portion as a digital signal, but may be a resolver that outputs as an analog signal, or may be other rotation detectors. The rotary encoder may have a configuration having an optical detection unit or a configuration having a magnetic detection unit. The input-side rotation detector 18A and the output-side rotation detector 18B may be different types of detectors.

In the input-side rotation detector 18A and the output-side rotation detector 18B, the two sensors 18Ab and 18Bb are mounted on an encoder board of the circuit unit 17, and the two rotating portions 18Aa and 18Ba are disposed to face the circuit unit 17 from the output side.

### [Brake]

The brake 14 includes a hub member 14a that is fixed to the rotor shaft 13 so that a relative rotation is restricted, a disc-shaped rotor core 14b that is spline-fitted to the hub member 14a, an armature 14c that is displaceable toward the rotor core 14b, an electromagnetic coil 14d that drives the armature 14c, a spring material that returns the armature 14c to an original position thereof, a plate 14e that faces the rotor core 14b on a side opposite to the armature 14c, and a stator core 14g that is supported by the casing 11 and holds the electromagnetic coil 14d and the plate 14e. Linings (abrasion materials) are fixed to the surfaces of the plate 14e and the armature 14c facing the rotor core 14b, respectively.

In the brake 14, the rotor core 14b is interposed between the armature 14c and the plate 14e via a lining by an action of the electromagnetic coil 14d or an action of the spring material, and thus a braking force is applied to the rotor shaft 13. Further, a force of the armature 14c and the plate 14e which are interposing the rotor core 14b is released by the action of the spring material or the action of the electromagnetic coil 14d, and thus the braking force applied to the rotor shaft 13 is released.

### [Connection Structure of Casing]

The gear motor 1 has a structure in which an approximately cylindrical outer shell is constituted by the member 11a, the member 11b, the member 11c, the member 11d, the member 11e, the member 11f, the first internal gear 15d, the member 11g, and the member 11h disposed side by side from the counter-output side to the output side along the axial direction, and configurations other than the above-mentioned components are accommodated in the outer shell.

Then, among the members constituting the outer shell, the member 11d corresponds to a brake casing that accommodates the brake 14, the member 11f and member 11e correspond to a motor casing that accommodates the motor 12, and the first internal gear 15d, the member 11g, and the member 11h correspond to a speed reducer casing that accommodates the reduction mechanism 15.

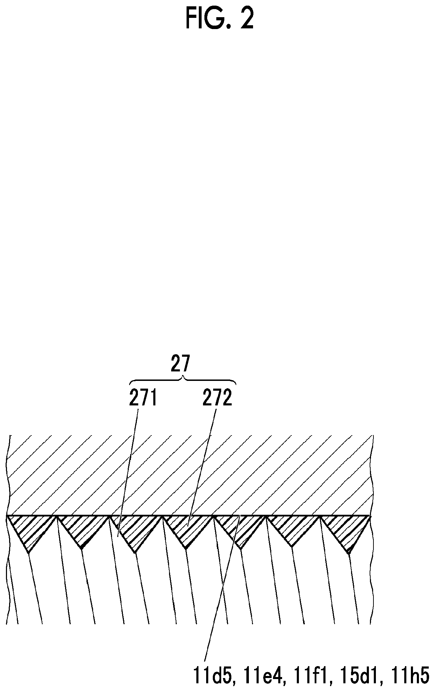

Regarding some of the members 11a to 11h and the respective members of the first internal gear 15d constituting the outer shell, adjacent members are connected to each other by a bolt. However, apart from the bolt, the member 11c to 11f, the first internal gear 15d, the member 11g, and the member 11h are integrally connected to each other by a co-tightening by a long bolt 271 serving as a main connection member constituting the connection member 27 (refer to Fig. 2) at a plurality of locations at uniform intervals in the circumferential direction.

In each of the member 11d to 11f, the first internal gear 15d, the member 11g, and the member 11h, bolt insertion holes 11d5, 11e4, 11f1, 15d1, 11g2, and 11h5 serving as connection holes having the same inner diameter are formed so as to penetrate in the axial direction in dispositions coinciding with each other at a plurality of locations at uniform intervals in the circumferential direction (only one is illustrated in Fig. 1) .

Further, in an output-side end surface of the member 11c, screw holes 11c1 are formed at a plurality of locations having uniform intervals in the circumferential direction in dispositions that coincide with the bolt insertion holes 11d5, 11e4, 11f1, 15d1, 11g2, and 11h5 in the circumferential direction (only one is illustrated in Fig. 1).

Then, the plurality of long bolt 271 are inserted into the bolt insertion holes 11h5, 11g2, 15d1, 11f1, 11e4 and 11d5 from the output side of the member 11h and screwed into the screw holes 11c1.

Further, each long bolt 271 is inserted into an attachment hole 201a of the mating member 201 on the output side of the member 11h, and the mating member 201, the member 11c to 11f, the first internal gear 15d, the member 11g, and the member 11h are co-fastened. Therefore, each long bolt 271 integrally connects the members 11c to 11f, the first internal gear 15d, the member 11g, and the member 11h, and attaches the gear motor 1 to the mating member 201.

In the bolt insertion holes 11d5 and 11e4 of the member 11d and 11e, a part or the whole thereof in the axial direction is open to the inside of the member 11d and 11e.

Then, an outer periphery of the connection member 27 inserted into the bolt insertion holes 11d5 and 11e4 can be brought into direct contact with the stator core 14g of the brake 14 provided in the member 11d and the stator core 12a of the motor 12 provided in the member 11e.

The long bolt 271 of the connection member 27 is made of steel (including alloy steel) or non-ferrous metal alloy, which is a general bolt material, and has a thermal conductivity of 40 to 200 [W/m·k].

The long bolt 271 extends in the axial direction over all the member 11c to 11f, the first internal gear 15d, the member 11g, and the member 11h constituting the brake casing, the motor casing, and the speed reducer casing, integrally fastens the members, and functions as a heat exhaust path through which a heat is transmitted from these members to the mating member 201.

The stator core 12a of the motor 12 and the stator core 14g of the brake 14 generate heat in these operating states and can serve as a heat source for the gear motor 1.

Since the connection member 27 is disposed so as to be in direct contact with the stator cores 12a and 14g, heat transfer is satisfactorily performed from the stator cores 12a and 14g, and heat can be efficiently exhausted to the mating member 201.

Fig. 2 is an enlarged cross-sectional view of an outer peripheral portion of the connection member 27 inserted into the bolt insertion holes 11h5, 11g2, 15d1, 11f1, 11e4, and 11d5.

Since the long bolt 271 of the connection member 27 has a screw groove formed on the outer periphery thereof and needs to have a dimensional tolerance that can be inserted, in the state of only the long bolt 271, a void may be formed between the inner peripheries of the bolt insertion holes 11h5, 11g2, 15d1, 11f1, 11e4, and 11d5 and the stator cores 12a and 14g. The presence of the void may cause a decrease in thermal conductivity. Moreover, the long bolt 271 does not necessarily have a screw groove formed over the entire length. That is, a screw groove may be formed at least in a portion screwed into the screw hole 11c1 of the member 11c, and the other portion may be a columnar surface.

Therefore, the connection member 27 includes a high thermal conductivity member 272 provided on the outer periphery of the long bolt 271.

The high thermal conductivity member 272 may be a member having thermal conductivity higher than that of air, and may be a general resin having the thermal conductivity of about 0.2 to 0.4 [W/m-k]. However, preferably, the high thermal conductivity member 272 is a high thermal conductivity resin having thermal conductivity of 1.0 [W/m·k] or more, for example, a metal having thermal conductivity higher than that of a resin, an epoxy resin containing a filler such as graphite, a polyphenylene sulfide (PPS) resin, or the like. Further, the high thermal conductivity member 272 may be made of a material other than a resin.

The high thermal conductivity member 272 may be in the form of a sheet or a paste, and is interposed between surfaces of contact portions of the outer periphery of the long bolt 271, the inner peripheries of the bolt insertion holes 11h5, 11g2, 15d1, 11f1, 11e4, and 11d5, and the stator cores 12a and 14g. Accordingly, generation of the void is suppressed, and high thermal conductivity is maintained for the member 11a to 11h, the first internal gear 15d, the stator cores 12a and 14g, and the long bolt 271, and thus, it is possible to efficiently exhaust heat.

### [Operation Description]

When the motor 12 is driven to rotate the rotor shaft 13 and the wave generator 15a, the motion of the wave generator 15a is transmitted to the external gear 15c. In this case, the external gear 15c is regulated to a shape along an outer peripheral surface of the wave generator 15a, and as viewed from the axial direction, deflected into an elliptical shape having a long shaft portion and a short shaft portion.

Further, the external gear 15c meshes with the fixed first internal gear 15d at the long shaft portion. Therefore, the external gear 15c does not rotate at the same rotation speed as that of the wave generator 15a, and the wave generator 15a rotates relatively inside the external gear 15c.

Then, according to this relative rotation, the external gear 15c is flexibly deformed so that a long axis position and a short axis position move in the circumferential direction. A period of this deformation is proportional to a rotation period of the wave generator 15a. When the external gear 15c is flexibly deformed, the long axis position thereof moves, and thus a position where the external gear 15c and the first internal gear 15d mesh with each other is changed in the rotational direction.

Here, it is assumed that the number of teeth of the external gear 15c is 100 and the number of teeth of the first internal gear 15d is 102. Then, every time the meshing position goes around, meshing teeth of the external gear 15c and the first internal gear 15d are shifted, and thus the external gear 15c rotates. With the above number of teeth, the rotating motion of the wave generator 15a is decelerated at a reduction ratio of 100:2 and transmitted to the external gear 15c. Meanwhile, the external gear 15c meshes with the second internal gear 15e, and thus the position where the external gear 15c and the second internal gear 15e mesh with each other is changed in the rotational direction by the rotation of the wave generator 15a.

Here, if the number of teeth of the second internal gear 15e and the number of teeth of the external gear 15c are equal to each other, the external gear 15c and the second internal gear 15e do not rotate relative to each other, and the rotating motion of the external gear 15c is transmitted to the second internal gear 15e at a reduction ratio of 1:1. Accordingly, the rotating motion of the wave generator 15a is decelerated at the reduction ratio of 100:2, transmitted to the second internal gear 15e, and output from the second internal gear 15e to the mating member 202 via the output member 16.

During the transmission of the rotating motion, a rotational position of the rotor shaft 13 is detected by the input-side rotation detector 18A, and a rotational position of the output member 16 is detected by the output-side rotation detector 18B.

When the drive of the motor 12 is stopped and the brake 14 is activated, the armature 14c is driven, the rotor core 14b is interposed between the plate 14e and the armature 14c via a lining, and a braking force acts on the rotor shaft 13. When the motor 12 is driven, the armature 14c is separated from the rotor core 14b and the braking force is released.

### [Technical Effect]

As described above, in the gear motor 1, the member 11c to 11f, the first internal gear 15d, the member 11g, and the member 11h constituting the casing are connected to each other by the connection member 27 disposed in the screw hole 11c1 and the bolt insertion holes 11d5, 11e4, 11f1, 15d1, 11g2, and 11h5 provided in these.

Further, the connection member 27 is in direct contact with the stator core 12a of the motor 12, reaches the member 11h of the casing 11 connected to the mating member 201, and further reaches the mating member 201.

Therefore, the heat of the stator core 12a, which generates heat during an operation of the motor 12, can be transmitted to the member 11h using the connection member 27 as a heat path, and further, can be directly transmitted to the mating member 201. Accordingly, it is possible to efficiently exhaust heat.

Therefore, it is possible to suppress a temperature rise of the gear motor 1, prevent a reduction in an output of the motor 12, and maintain good driving conditions.

Further, the heat transmitted from the inside of the gear motor 1 to the member 11c to 11f, the first internal gear 15d, the member 11g, and the member 11h can also be transmitted from the connection member 27 as a heat path to the mating member 201, and thus it is also possible to efficiently exhaust heat.

In particular, since the connection member 27 has a long bolt 271 constituted by one member over the entire length, occurrence of heat transfer loss at a boundary surface between the members is suppressed, and it is possible to more efficiently exhaust heat.

Further, since the connection member 27 is disposed to be in direct contact with the stator core 14g of the brake 14, the heat of the stator core 14g, which generates heat during the operation of the brake 14, can also be directly transmitted to the member 11h and the mating member 201 using the connection member 27 as a heat path, and it is possible to more efficiently exhaust heat.

Moreover, the connection member 27 has the high thermal conductivity member 272 disposed in the clearance between the long bolt 271, the members 11d to 11f, the first internal gear 15d, and the member 11g, the clearance between the long bolt 271 and the bolt insertion holes 11d5, 11e4, 11f1, 15d1, 11g2, and 11h5 of the member 11h, and the clearance between the long bolt 271 and the stator cores 12a and 14g. Accordingly, it is possible to suppress a decrease in thermal conductivity due to the voids, and it is possible to more efficiently exhaust heat.

Further, in the gear motor 1, each of the member 11f of the casing 11 and the second internal gear 15e is made of a resin material, and the other members 11a to 11e of the casing 11 may also be made of a resin material.

In this way, when a resin material is used for a portion or the whole of the casing, weight saving of the gear motor 1 can be realized. Moreover, even when a resin material having a low thermal conductivity is used, a heat transmission path can be secured by the connection member 27, and thus it is possible to efficiently exhaust heat and to suppress a temperature rise of the gear motor 1.

Further, when a resin material is used for a portion or the whole of the casing, it is not possible to ground the mating member 201 from the inside of the device through the casing. However, when the long bolt made of a conductive material such as metal is used for the connection member 27, it is possible to ground through the connection member 27.

### [Second Embodiment]

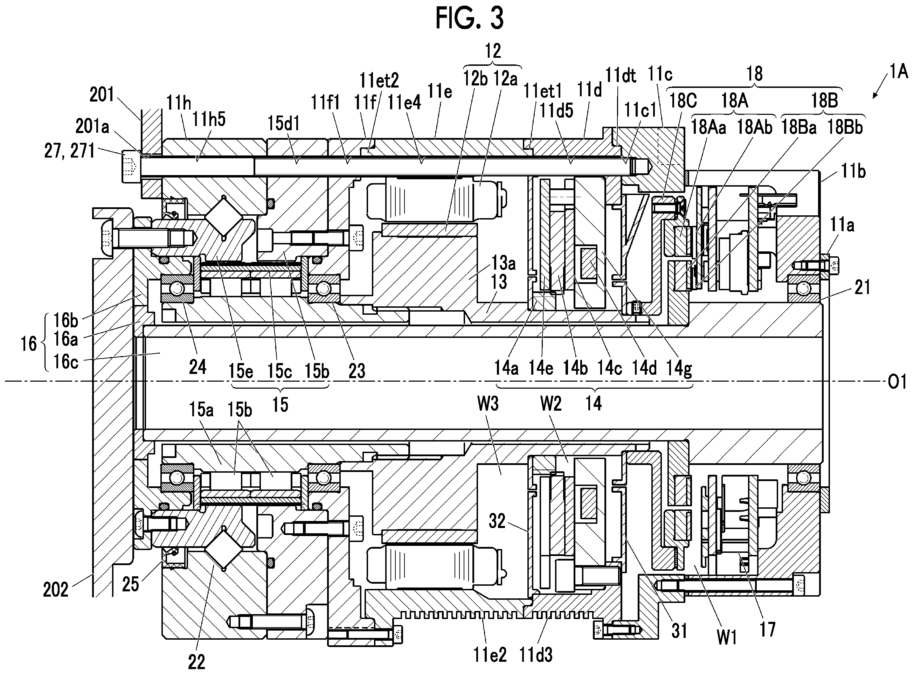

Hereinafter, a second embodiment of the present invention will be described in detail with reference to the drawings. Fig. 3 is a cross-sectional view illustrating a gear motor 1A according to the second embodiment.

Regarding the gear motor 1A, the same reference symbols as those of the gear motor 1 are attached to configurations corresponding to the configurations of the gear motor 1 described above. Further, although there are minor changes in dimensions and shapes with respect to the corresponding configurations of the gear motor 1, detailed descriptions are omitted for the configurations in which functions and operations are the same, and only points different from the gear motor 1 will be described.

The gear motor 1A has a different configuration on the output side from the reduction mechanism 15.

The reduction mechanism 15 is a tubular type flexible meshing gear mechanism, and includes the wave generator 15a, the wave generator bearing 15b, the external gear 15c, the first internal gear 15d, and the second internal gear 15e. However, the first internal gear 15d does not have a structure that covers a radial outer side of the second internal gear 15e.

Instead, the member 11h of the casing 11 covers the radial outer side of the second internal gear 15e.

Further, the bearing 22 that rotatably supports the output member 16 is provided between the member 11h and the second internal gear 15e, and the outer ring of the bearing 22 is integrally formed with the member 11h, and the inner ring of the bearing 22 is formed integrally formed with the second internal gear 15e.

Accordingly, the member 11g that is provided in the gear motor 1 and regulates the counter-output side movement of the bearing 22 is not provided in the gear motor 1A.

Further, the seal 25 is provided between the member 11h and the second internal gear 15e.

The output member 16 of the gear motor 1A includes the shaft portion 16c having a hollow structure, the annular member 16a that tightly fits and spigot-fits the output-side end portion of the shaft portion 16c, and an annular member 16a that tightly fits and internally fits the member 16b.

Then, the member 16b is a tubular portion extending to the counter-output side and externally fits the second internal gear 15e, and the mating member 202, the member 16b, and the second internal gear 15e are integrally connected by a co-tightening using a bolt.

The gear motor 1A includes the members 11a to 11f, the first internal gear 15d, and the member 11h provided side by side from the counter-output side to the output side along the axial direction, and configurations other than the above-mentioned components are accommodated in the substantially cylindrical outer shell constituted by the components. As described above, since the member 11g is not provided, the first internal gear 15d and the member 11h are disposed adjacent to each other.

Thus, in the gear motor 1A, the speed reducer casing is constituted by first internal gear 15d and the member 11h.

The long bolt 271 of the connection member 27 is inserted into the bolt insertion holes 11d5, 11e4, 11f1, 15d1, 11h5 formed at the same positions in the circumferential direction of the member 11d to 11f, the first internal gear 15d, and the member 11h, and screwed into the screw hole 11c1 of the member 11c.

Furthermore, the connection member 27 connects the members 11c to 11f, the first internal gear 15d, and member 11h together with the mating member 201 by co-fastening, and thus attaches the gear motor 1A to the mating member 201.

Further, a heat exhaust structure by the connection member 27 is substantially the same as that of the gear motor 1.

In the gear motor 1A, when the motor 12 is driven to rotate the rotor shaft 13 and the wave generator 15a, the elliptical long axis position of the external gear 15c is orbited and moved by the wave generator 15a. When a relative deceleration rotation is generated between the first internal gear 15d and the second internal gear 15e by the meshing with the external gear 15c and the mating member 201 side is fixed, the deceleration rotation is output from the second internal gear 15e to the mating member 202 via the output member 16.

As described above, as compared to gear motor 1, in the gear motor 1A, it is possible to reduce the number of components. Moreover, like the gear motor 1, it is possible to efficiently exhaust heat, suppress a temperature rise of the gear motor 1A, prevent the reduction in the output of the motor 12, and maintain good driving conditions.

Further, also in the case of the gear motor 1A, the member 11f of the casing 11 and the second internal gear 15e can be made of a resin material, and the other members 11a to 11e of the casing 11 can also be made of a resin material.

In this case as well, it is possible to achieve weight saving of the gear motor 1A, efficiently exhaust heat, and suppress the temperature rise in the gear motor 1A.

### [Other]

Heretofore, the embodiments of the present invention are described. However, the present invention is not limited to the embodiments.

For example, in the embodiments, the configuration in which the connection member 27 has a long bolt 271 is exemplified. However, the bolt should have a dimensional tolerance with the bolt insertion hole, and a screw groove is formed on an outer periphery of the bolt. Therefore, voids are likely to occur.

Therefore, a configuration in which the connection member 27 has a long rivet pin may be adopted.

In this case, the bolt insertion holes 11d5, 11e4, 11f1, 15d1, 11g2, and 11h5 of the member 11d to 11f, the first internal gear 15d, the member 11g, and the member 11h are used as through-holes for tightening and fitting the rivet pin, and the screw hole 11c1 of the member 11c is changed to a bottomed hole for tightening and fitting a tip of the rivet pin.

Then, after the rivet pin is inserted into the attachment hole 201a of the mating member 201, the rivet pin is press-fitted into the through-holes and the bottomed holes of the member 11c to 11f, the first internal gear 15d, the member 11g and the member 11h, connects the member 11c to 11f, the first internal gear 15d, the member 11g, and the member 11h, and attaches the members to the mating member 201.

In this case as well, the high thermal conductivity member 272 may be interposed between the rivet pin and the through-hole constituted by the bolt insertion holes 11d5, 11e4, 11f1, 15d1, 11g2, and 11h5.

As described above, when the rivet pin is used for the connection member 27, generation of a void between the rivet pin and each through-hole constituted by the bolt insertion holes 11d5, 11e4, 11f1, 15d1, 11g2, and 11h5 can be suppressed, and thus it is possible to improve heat conductivity. The connection member is not limited to the bolt and the rivet pin as long as it is a member that connects the casing, and various connection member can be adopted.

Further, the configuration is described, in which the members of the casing are connected to each other and the gear motor 1 is attached to the mating member 201 by the connection member 27. However, the present invention is not limited to this.

For example, when the member 11h contacting the mating member 201 is made of a material having high thermal conductivity, for example, metal, the connection member 27 only connects the members 11c to 11f, the first internal gear 15d, the member 11g, and the member 11h, and the gear motor 1 may be attached to the mating member 201 by another bolt.

In this case, the connection member 27 extends over the member 11c to 11f, the first internal gear 15d, the member 11g, and the member 11h, and is connected to the member 11h serving as a casing that is directly connected to the mating member 201. However, the connection member 27 does not come into direct contact with the mating member 201. However, since the connection member 27 serves as a heat transmission path from the member 11c to the member 11h, heat can be exhausted to the mating member 201 through the member 11h, and thus the temperature rise of the gear motor 1 can be suppressed.

Further, the casing member to which the mating member 201 is connected is not limited to the member 11h located on the most output side as long as it is a casing accommodating the reduction mechanism. Moreover, the connection member 27 has only to reach the casing member to which the mating member 201 is connected, there is no need to reach casing member 11h on the most output side.

The configuration of the gear motor 1 is also applicable to the gear motor 1A.

### Brief Description of the Reference Symbols

1, 1A: gear motor
11: casing
11a to 11h: member (casing)
11c1: screw hole
11d5, 11e4, 11f1, 15d1, 11g2, 11h5: bolt insertion hole (connection hole)
12: motor (electric motor)
12a: stator core
14: brake
14g: stator core
15: reduction mechanism (speed reducer)
16: output member
16a, 16b: member
16c: shaft portion
17: circuit unit
18: detection unit
27: connection member
201, 202: mating member
271: long bolt (main connection member)
272: high thermal conductivity member
O1: center axis

## Claims

1. A gear motor (1, 1A) comprising:
a speed reducer (15) having a plurality of speed reducer casings (11g, 11h, 15d); and a motor (12) including a motor casing (11f, 11e) and a stator core (12a) supported by the motor casing (11f, 11e); wherein the speed reducer (15) and the motor (12) are connected to each other and to a device-outside-mating member (201), and
wherein, a connection hole (11d5, 11e4, 11f1, 15d1, 11g2, 11h5) is provided through the plurality of speed reducer casings (11g, 11h, 15d) and the motor casing (11f, 11e); and
the gear motor (1, 1A) comprising:
a connection member (27) that is inserted into the connection hole (11d5, 11e4, 11f1, 15d1, 11g2, 11h5) and connects the speed reducer casings (11g, 11h, 15d) and the motor casing (11f, 11e),
**characterized in that**
an outer periphery of the connection member (27) is in direct contact with the stator core (12a) of the motor (12) and reaches the speed reducer casing (11h), which is connected to the device-outside-mating member (201), among the speed reducer casings (11g, 11h, 15d), such that heat of the stator core (12a) is transferred to the device-outside-mating member (201) through the connection member (27), and
the connection member (27) is configured to function as a heat exhaust path through which heat is transferred to the device-outside-mating member (201).

2. The gear motor (1, 1A) according to claim 1, wherein the connection member (27) includes a main connection member (271) and a high thermal conductivity member (272) that is disposed in a clearance between the main connection member (271) and the speed reducer casings (11g, 11h, 15d), and between the main connection member (271) and the motor casing (11f, 11e) and has thermal conductivity higher than that of air.

3. The gear motor (1, 1A) according to claim 2, wherein the high thermal conductivity member (272) is made of a resin including a filler having thermal conductivity higher than that of a resin.

4. The gear motor (1, 1A) according to any one of claims 1 to 3, wherein at least a portion of the speed reducer casings (11g, 11h, 15d) and the motor casing (11f, 11e) is made of a resin.

5. The gear motor (1, 1A) according to any one of claims 1 to 4, further comprising:
a brake (14),
wherein the connection hole (11d5, 11e4, 11f1, 15d1, 11g2, 11h5) is provided in a brake casing, and
the outer periphery of the connection member (27) is in direct contact with a stator core (12g, 14g) of the brake (14).

## Patentansprüche

1. Getriebemotor (1, 1A), umfassend:
einen Drehzahlminderer (15), der mehrere Drehzahlminderergehäuse (11g, 11h, 15d) aufweist; und einen Motor (12) mit einem Motorgehäuse (11f, 11e) und einem Statorkern (12a), der von dem Motorgehäuse (11f, 11e) gestützt wird;
wobei der Drehzahlminderer (15) und der Motor (12) miteinander und mit einem Vorrichtungsaußengegenelement (201) verbunden sind, und
wobei ein Verbindungsloch (11d5, 11e4, 11f1, 15d1, 11g2, 11h5) durch die mehreren Drehzahlminderergehäuse (11g, 11h, 15d) und das Motorgehäuse (11f, 11e) vorgesehen ist; und
der Getriebemotor (1, 1A) umfasst:
ein Verbindungselement (27), das in das Verbindungsloch (11d5, 11e4, 11f1, 15d1, 11g2, 11h5) eingesetzt ist und die Drehzahlminderergehäuse (11g, 11h, 15d) und das Motorgehäuse (11f, 11e) miteinander verbindet,
**dadurch gekennzeichnet, dass**
ein Außenumfang des Verbindungselements (27) in direktem Kontakt mit dem Statorkern (12a) des Motors (12) steht und das Drehzahlminderergehäuse (11h), das mit dem Vorrichtungsaußengegenelement (201) verbunden ist, unter den Drehzahlminderergehäusen (11g, 11h, 15d) erreicht, so dass Wärme des Statorkerns (12a) durch das Verbindungselement (27) auf das Vorrichtungsaußengegenelement (201) übertragen wird, und
das Verbindungselement (27) konfiguriert ist, als ein Wärmeableitweg zu fungieren, über den Wärme an das Vorrichtungsaußengegenelement (201) übertragen wird.

2. Getriebemotor (1, 1A) nach Anspruch 1,
wobei das Verbindungselement (27) ein Hauptverbindungselement (271) und ein Element (272) mit hoher Wärmeleitfähigkeit umfasst, das in einer Aussparung zwischen dem Hauptverbindungselement (271) und den Drehzahlminderergehäusen (11g, 11h, 15d) und zwischen dem Hauptverbindungselement (271) und dem Motorgehäuse (11f, 11e) angeordnet ist und eine höhere Wärmeleitfähigkeit als die von Luft aufweist.

3. Getriebemotor (1, 1A) nach Anspruch 2,
wobei das Element (272) mit hoher Wärmeleitfähigkeit aus einem Harz hergestellt ist, das einen Füllstoff mit höherer Wärmeleitfähigkeit als die eines Harzes enthält.

4. Getriebemotor (1, 1A) nach einem der Ansprüche 1 bis 3,
wobei zumindest ein Teil der Drehzahlminderergehäuse (11g, 11h, 15d) und des Motorgehäuses (11f, 11e) aus einem Harz hergestellt ist.

5. Getriebemotor (1, 1A) nach einem der Ansprüche 1 bis 4, ferner umfassend:
eine Bremse (14),
wobei das Verbindungsloch (11d5, 11e4, 11f1, 15d1, 11g2, 11h5) in einem Bremsgehäuse vorgesehen ist, und
der Außenumfang des Verbindungselements (27) in direktem Kontakt mit einem Statorkern (12g, 14g) der Bremse (14) steht.

## Revendications

1. Un moteur à engrenages (1, 1A) comprenant :
un réducteur de vitesse (15) comportant une pluralité de carters de réducteur de vitesse (11g, 11h, 15d) ; et un moteur (12) comprenant un carter de moteur (11f, 11e) et
un noyau de stator (12a) soutenu par le carter de moteur (11f, 11e) ;
dans lequel le réducteur de vitesse (15) et le moteur (12) sont reliés l'un à l'autre et à un élément d'accouplement extérieur au dispositif (201), et
dans lequel, un trou de raccordement (11d5, 11e4, 11f1, 15d1, 11g2, 11h5) est disposé à travers la pluralité de carters de réducteur de vitesse (11g, 11h, 15d) et le carter de moteur (11f, 11e) ; et
le moteur à engrenages (1, 1A) comprenant :
un élément de raccordement (27) qui est inséré dans le trou de raccordement (11d5, 11e4, 11f1, 15d1, 11g2, 11h5) et relie les carters de réducteur de vitesse (11g, 11h, 15d) et le carter de moteur (11f, 11e),
**caractérisé en ce que**
une périphérie externe de l'élément de raccordement (27) est en contact direct avec le noyau de stator (12a) du moteur (12) et atteint le carter de réducteur de vitesse (11h), qui est relié à l'élément d'accouplement extérieur au dispositif (201), parmi
les carters de réducteur de vitesse (11g, 11h, 15d), de sorte que la chaleur du noyau de stator (12a) est transférée à l'élément d'accouplement extérieur au dispositif (201) par l'intermédiaire de l'élément de raccordement (27), et
l'élément de raccordement (27) est configuré pour fonctionner en tant que trajet d'échappement de chaleur par l'intermédiaire duquel la chaleur est transférée à l'élément d'accouplement extérieur au dispositif (201).

2. Le moteur à engrenages (1, 1A) selon la revendication 1,
dans lequel l'élément de raccordement (27) comprend un élément de raccordement principal (271) et un élément à conductivité thermique élevée (272) qui est disposé dans un dégagement entre l'élément de raccordement principal (271) et les carters de réducteur de vitesse (11g, 11h, 15d), et entre l'élément de raccordement principal (271) et le carter de moteur (11f, 11e) et a une conductivité thermique supérieure à celle de l'air.

3. Le moteur à engrenages (1, 1A) selon la revendication 2, dans lequel l'élément à conductivité thermique élevée (272) est constitué d'une résine comprenant une charge ayant une conductivité thermique supérieure à celle d'une résine.

4. Le moteur à engrenages (1, 1A) selon l'une quelconque des revendications 1 à 3,
dans lequel au moins une partie des carters de réducteur de vitesse (11g, 11h, 15d) et le carter de moteur (11f, 11e) sont constitués d'une résine.

5. Le moteur à engrenages (1, 1A) selon l'une quelconque des revendications 1 à 4, comprenant en outre :
un frein (14),
dans lequel le trou de raccordement (11d5, 11e4, 11f1, 15d1, 11g2, 11h5) est disposé dans un carter de frein, et
la périphérie externe de l'élément de raccordement (27) est en contact direct avec un noyau de stator (12g, 14g) du frein (14).
